# EUROPEAN PATENT APPLICATION

(11) **EP 4 621 947 A1**
(43) Date of publication of application: **24.09.2025**
(21) Application number: 23907889.2
(22) Date of filing: 22.12.2023
(51) Int. Cl.: H01M 50/178, H01M 50/184, H01M 50/105

(54) **SEALING DEVICE AND POUCH TYPE SECONDARY BATTERY SEALED THEREBY**

(30) Priority: 22.12.2022 KR 20220182074; 21.12.2023 KR 20230188447
(71) Applicant: LG Energy Solution, Ltd., Seoul 07335 (KR)
(72) Inventor: HONG, Eui Jin, Daejeon 34122 (KR); KANG, In Woo, Daejeon 34122 (KR); BAEK, Doo Hyun, Daejeon 34122 (KR); CHO, Seung Su, Daejeon 34122 (KR); LEE, Hyun Ju, Daejeon 34122 (KR)
(74) Representative: Goddar, Heinz J.
(86) International application number: PCT/KR2023/021481
(87) International publication number: WO 2024/136606

(57) **Abstract**

A sealing apparatus according to an embodiment of the present invention may seal a pouch-type battery case including an accommodation part in which an electrode assembly is accommodated and a terrace part disposed around the accommodation part. The sealing device may include a pair of sealing tools configured to face each other with the terrace part therebetween and to be adjusted in mutual distance. Each of the sealing tools may include a protrusion protruding toward the terrace portion; and a recess defined to be stepped with respect to the protrusion. When the pair of sealing tools press the terrace part, a distance between the protrusions of the pair of sealing tools is adjusted to be 68% to 82% of an initial thickness of the terrace part.

## Description

### TECHNICAL FIELD

### CROSS-REFERENCE TO RELATED APPLICATION

The present application claims the benefit of the priority of Korean Patent Application Nos. 10-2022-0182074, filed on December 22, 2022, and 10-2023-0188447, filed on December 21, 2023, which are hereby incorporated by reference in their entirety.

### TECHNICAL FIELD

The present invention relates to a sealing apparatus that seals a terrace part of a pouch-type battery case, and a pouch-type secondary battery sealed thereby.

### BACKGROUND ART

A lithium secondary battery is manufactured in a manner in which, electrode active material slurry is applied to a positive electrode collector and a negative electrode collector to manufacture a positive electrode and a negative electrode, and the positive electrode and the negative electrode are stacked on both sides of a separator to form an electrode assembly, and then, the electrode assembly is accommodated in a pouch, and an electrolyte is injected into the case.

Such a secondary battery is classified into a pouch-type secondary battery and a can-type secondary battery according to a material of a case accommodating the electrode assembly. Among these, pouch-type secondary batteries are generally manufactured by providing an accommodation part in a flexible pouch film and accommodating an electrode assembly in the accommodation part to inject an electrolyte so as to seal a terrace part around the accommodation part.

In the related art, when sealing the terrace part including a gas pocket part of a pouch-type secondary battery, a plain shape has been applied to provide the sealing part.

However, sealing strength of the sealing part, especially a portion, at which the innermost layers of the battery case are sealed, is not sufficient, and thus, there is a problem in that a vent occurs earlier than designer's intention. In more detail, a pressure applied to the terrace part increases due to high-temperature storage and a gas generated in charging/discharging cycle of a secondary battery. Here, once the innermost layer of the battery case begins to be broken in the sealing part, the sealing part having the plain shape does not have a portion at which the breakage is blocked, and thus, an area that is broken over time quickly increases, eventually causing a vent.

Thus, there is a need to increase in sealing strength of the portion at which the innermost layers of the battery case are sealed and to delay abnormal venting.

### DISCLOSURE OF THE INVENTION

### TECHNICAL PROBLEM

An object of the present invention for solving the above problem is to provide a sealing apparatus provided with a sealing part having high sealing strength and a breakage delay effect.

Another object of the prevent invention for solving the above problem is to provide a pouch-type secondary battery including a sealing part having high sealing strength and a breakage delay effect.

### TECHNICAL SOLUTION

A sealing apparatus according to an embodiment of the present invention may seal a pouch-type battery case including an accommodation part in which an electrode assembly is accommodated and a terrace part disposed around the accommodation part. The sealing device may include a pair of sealing tools configured to face each other with the terrace part therebetween and to be adjusted in mutual distance. Each of the sealing tools may include a protrusion protruding toward the terrace portion; and a recess defined to be stepped with respect to the protrusion. When the pair of sealing tools press the terrace part, a distance between the protrusions of the pair of sealing tools is adjusted to be 68% to 82% of an initial thickness of the terrace part.

The protrusion may be disposed at the innermost side of the sealing tool.

The protrusion and the recess may be disposed alternately in a width direction of the sealing tool.

When the pair of sealing tools press the terrace part, a distance between the recesses of the pair of sealing tools may be adjusted to be 86% to 99% of the initial thickness of the terrace part.

A plurality of the protrusions may include: a first protrusion; and a second protrusion disposed outside the first protrusion and having a width less than a width of the first protrusion.

A width of the recess may be less than a width of an innermost protrusion.

The protrusion may be plural and have a greater width as the protrusion is disposed inside with respect to the width direction of the sealing tool.

The protrusion may be single and disposed inside the recess.

When the pair of sealing tools press the terrace part, a distance between the recesses of the pair of sealing tools may be adjusted to be 78% to 92% of the initial thickness of the terrace part.

Each of sealing tools may include: a first pressing area on which an inner surface of the terrace part and an insulating member, which surrounds an electrode lead connected to the electrode assembly, are sealed to each other; and a second pressing area on which inner surfaces of the terrace parts are sealed to each other. The protrusion and the recess may be included in the second pressing area.

A pouch-type secondary battery according to an embodiment of the present invention may include: an electrode assembly; and a pouch-type battery case including an accommodation part configured to accommodate the electrode assembly and a terrace part disposed around the accommodation part. The terrace part may include: a sealing part; and a gas pocket part disposed between the sealing part and the accommodation part. The sealing part may include: a thin-part extending along an edge of the sealing part; and a thick-part extending in parallel to the thin-part and thicker than the thin-part. A thickness of the thin-part may be 68% to 82% of the thickness of the gas pocket part.

The thin-part may be disposed at an innermost side of the sealing part.

The thin-part and the thick-part may be disposed alternately in a width direction of the sealing part.

The thickness of the thick-part may be 86% to 99% of the thickness of the gas pocket part.

A plurality of the thin-parts may include: a first thin-part; and a second thin-part disposed outside the first thin-part and having a width less than a width of the first thin-part.

A width of the thick-part may be less than a width of an innermost thin-part.

The thin-part may be plural and have a greater width as the thin-part is disposed inside with respect to the width direction of the sealing tool.

The thin-part may be single and disposed inside the thick-part in a width direction of the sealing part.

The thickness of the thick-part may be 78% to 92% of the thickness of the gas pocket part.

The pouch-type secondary battery may further include: an electrode lead connected to the electrode assembly to protrude to the outside of the terrace part; and an insulating member configured to insulate the electrode lead and the battery case from each other. The sealing part may include: a first sealing area on which an inner surface of the terrace part and the insulating member are sealed to each other; and a second sealing area on which inner surfaces of the terrace parts are sealed to each other. The thin-part and the thick-part may be included in the second sealing area.

### ADVANTAGEOUS EFFECTS

According to the preferred embodiment of the present invention, the sealing strength of the sealing part provided in the pouch-type battery case may increase to prevent or delay the occurrence of the abnormal venting.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is an assembled view of a pouch-type secondary battery according to an embodiment of the present invention.
FIG. 2 is a plan view of the pouch-type secondary battery according to an embodiment of the present invention; and
FIG. 3 is a perspective view of a sealing apparatus according to an embodiment of the present invention.
FIG. 4a and 4b are an enlarged view of a second pressing area and surroundings thereof of the sealing apparatus illustrated in FIG. 3.
FIG. 5 is a schematic view for explaining an operation of the sealing apparatus according to an embodiment of the present invention.
FIG. 6 is an enlarged cross-sectional view of a sealing tool and the sealing part provided in the pouch-type battery case by the sealing tool, which are illustrated in FIG. 5.
FIG. 7 is an enlarged cross-sectional view of a sealing tool and the sealing part provided in the pouch-type battery case by the sealing tool according to another embodiment of the present invention.
FIGS. 8a to 8c are graphs obtained by summarizing results of experiments to confirm an effect of the sealing apparatus according to an embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

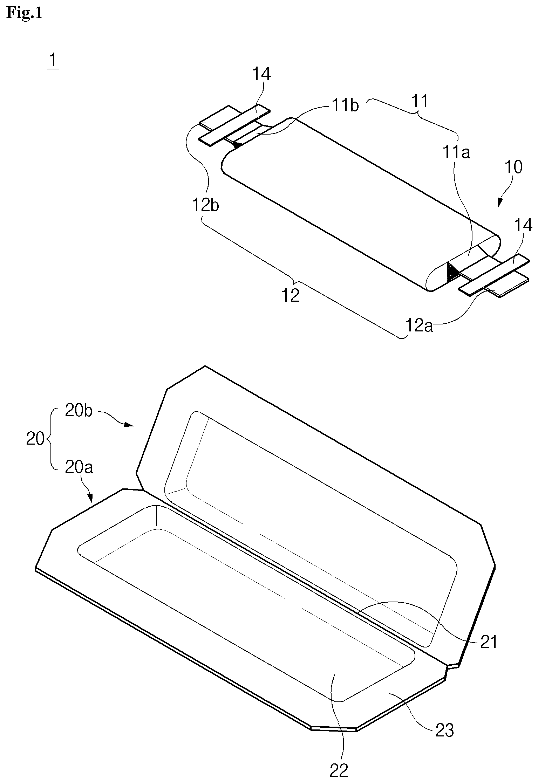

FIG. 1 is an assembled view of a pouch-type secondary battery according to an embodiment of the present invention.

A pouch-type secondary battery 1 (hereinafter, referred to as a 'secondary battery') according to an embodiment of the present invention may be a secondary battery sealed by a sealing apparatus according to the present invention. The secondary battery 1 described in this specification may be in a state at a specific point during a manufacturing process or may be in a final completed state and may be appropriately interpreted depending on the context or need.

The secondary battery 1 may include an electrode assembly 10 and a pouch-type battery case 20 (hereinafter, referred to as a "battery case").

The electrode assembly 10 may be provided by alternately stacking a positive electrode and a negative electrode with a separator therebetween. That is, the electrode assembly 10 may include a plurality of electrodes and a separator disposed between the plurality of electrodes to insulate the plurality of electrodes from each other. The electrode assembly 10 may be accommodated together with an electrolyte in the battery case 20, and more specifically, in the accommodation part 22, which will be described later.

The electrode assembly 10 may be provided in various types such as a stack type, a jelly roll type, and a stack and fold type, and the types of the electrode assembly 10 are not limited thereto.

The electrode assembly 10 may include an electrode tab 11. The electrode tab 11 may be connected to each of the positive electrode and the negative electrode of the electrode assembly 10 to protrude outward from the electrode assembly 10, thereby serving as a path, through which electrons move, between the inside and outside of the electrode assembly 10.

The electrode tab 11 may be provided by cutting a non-coating portion or by connecting a separate conductive member to the non-coating portion through ultrasonic welding.

The electrode tab 11 may include a positive electrode tab 11a connected to a positive electrode and a negative electrode tab 11b connected to a negative electrode. Although the positive electrode tabs 11a and the negative electrode tab 11b protrude in different directions of the electrode assembly 10, respectively, the embodiment of the present invention is not limited thereto. For example, the electrode tabs 11a and 11b may protrude in various directions, for example, protrude in parallel to each other from one side in the same direction.

An electrode lead 12 that supplies electricity to the outside of the battery cell 1 may be connected to the electrode tab 11 of the electrode assembly 10. In addition, a portion of the electrode lead 12 may be surrounded by an insulating member 14. The insulating member 14 may be sealed together with the first case 20a and the second case 114b. Thus, the insulating member 14 may insulate the electrode lead 12 from the battery case 20 to maintain the sealing of the battery case 20. In general, although an insulation tape which is easily attached to the electrode lead 12 and has a relatively thin thickness is mainly used as the insulating member 14, the present invention is not limited thereto. For example, various members may be used as the insulating member 14 as long as the members are capable of insulating the electrode lead 12.

The electrode lead 12 may have one end connected to the electrode tab 11 and the other end protruding to the outside of the battery case 20. The electrode lead 12 may include a positive electrode lead 12a connected to the positive electrode tab 11a and a negative electrode lead 12b connected to the negative electrode tab 11b.

The electrode lead 12 may electrically connect the electrode assembly 10 to the outside. In addition, since each of the positive electrode tab 11a and the negative electrode tab 112 protrudes in various directions, each of the positive electrode lead 12a and the negative electrode lead 12b may extend in various directions.

The battery case 20 may accommodate the electrode assembly 10 therein and may be formed by molding a laminate sheet. In more detail, when the laminate sheet having flexibility is drawn and molded using a die and a punch, a portion of the battery case 20 may be stretched to provide the accommodation part 22 having a pocket-shaped accommodation space, thereby manufacturing the battery case 20.

However, the configuration of the accommodation part 22 is not limited thereto and may be provided in a manner different from that illustrated in the drawings. For example, the laminate sheet may be folded in a preset shape to provide the accommodation part 22.

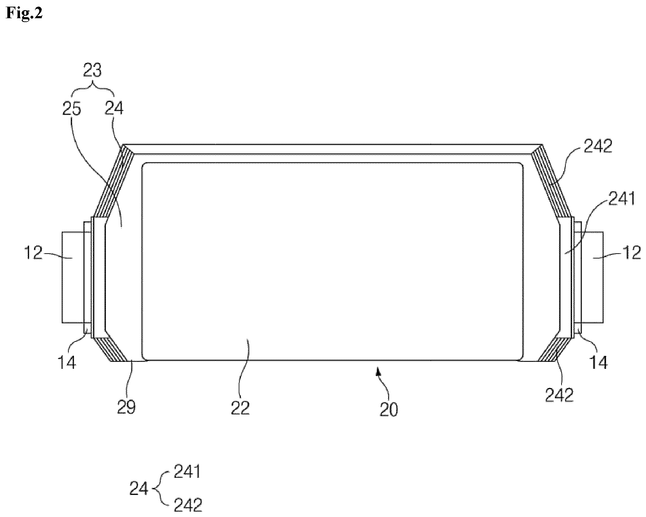

Hereinafter, the battery case 20 may be in a state at a specific time point during the manufacturing process or may be in a final completed state. That is, the description of the battery case 20 may include both a sealed state as illustrated in FIG. 2 or an unfolded state as illustrated in FIG. 1, and may be appropriately interpreted depending on the context or need.

The battery case 20 may accommodate the electrode assembly 10 so that a portion of the electrode lead 12 is exposed and then may be sealed.

The battery case 20 may include a first case 20a and a second case 20b that are sealed to each other with the electrode assembly 10 therebetween.

Preferably, the accommodation part 22 may be provided in at least one of the first case 20a and the second case 20b. In addition, a peripheral area of the accommodation part 22 may define the terrace part 23. That is, the battery case 20 may include the accommodation part 22 and the terrace part 23 disposed outside the accommodation part 22.

The first case 20a and the second case 20b may be connected to each other by a folding part 21. However, it is not limited thereto, and it is also possible that the first case 20a and the second case 20b are separated from each other and manufactured separately.

The accommodation part 22 may define an accommodation space capable of accommodating the electrode assembly 10. The accommodation part 22 may have a pocket shape.

Hereinafter, a case in which the accommodation part 22 is provided in each of the first case 20a and the second case 20b will be described as an example. Those skilled in the art will also be able to easily understand the case in which the accommodation part 22 is provided only in one of the pair of cases 20a and 20b.

The accommodation parts 22 of the pair of cases 20a and 20b may be disposed to face each other so as to accommodate the electrode assembly 10. That is, the accommodation parts 22 of the pair of cases 20a and 20b may be disposed to face each other so as to define an accommodation space in which the electrode assembly 10 is accommodated. In this case, when compared to the case in which the accommodation part 22 is provided only in one of the pair of cases 20a and 20b, the electrode assembly 20 may accommodate the electrode assembly 10 having a thick thickness and a large capacity.

The first case 20a and the second case 20b may be connected to each other by the folding part 21. In a state in which the first case 20a and the second case 20b are unfolded, a portion of the folding part 21 may be disposed between the accommodation part 22 of the first case 20a and the accommodation part 22 of the second case 20b, and the other portion of the folding part 21 may be disposed between the terrace part 23 of the first case 20a and the terrace part 23 of the second case 20b.

When the folding part 21 is folded, the first case 20a and the second case 20b may face each other. The folding part 21 may extend parallel to a full-length direction of the electrode assembly 10, but is not limited thereto.

Each of the cases 20a and 20b may include the terrace part 23 disposed around the accommodation part 22.

When the first case 20a and the second case 20b are provided as separate members that are not connected to each other by the folding part 21, the terrace parts 23 may be disposed around four sides of the accommodation part 22.

When the first case 20a and the second case 20b are connected to each other through the folding part 21, the terrace parts 23 may be disposed around three sides of the four sides of the accommodation part 22 except for a side of the folding part 21.

When the folding part 21 is folded, the terrace parts 23 of the first case 20a and the second case 20b may be in contact with each other. Here, the insulating member 14 of the electrode assembly 10 may be disposed between the terrace parts 23 of the pair of cases 20a and 20b.

FIG. 2 is a plan view of the pouch-type secondary battery according to an embodiment of the present invention.

Each of the terrace parts 23 may include a sealing part 24. The sealing part 24 may be portions that are sealed to each other through thermal fusion in a state in which the first case 20a and the second case 20b are in contact with each other. In more detail, the sealing part 24 may be provided by sealing parts of the outside of the terrace parts 23 of the pair of cases 20a and 20b to each other. A width of the sealing part 24 may be approximately constant, but is not limited thereto.

The sealing part 24 may include a first sealing area 241 on which an inner surface of the terrace part 23 and the insulating member 14 are sealed, and a second sealing area 242 on which the inner surfaces of the terrace part 23 are sealed with each other.

The second sealing area 242 may be disposed on both sides with the first sealing area 241 therebetween. Both the second sealing areas 242 may extend to be inclined or rounded with respect to the extension direction of the first sealing area 241. Both the second sealing areas 242 may extend in different directions. The extension direction of each second sealing area 242 may not be constant and may vary during the extension. However, it is not limited thereto, and the second sealing area 242 and the first sealing area 241 may extend in parallel to each other.

The first sealing area 242 may be provided by fusion of a polymer layer (e.g., polypropylene) defining the innermost layer of each of the first case 20a and the second case 20b to the insulating member 14. The second sealing area 242 may be provided by fusion of a polymer layer (e.g., polypropylene) defining the innermost layer of each of the first case 20a and the second case 20b.

The terrace part 23 may include a gas pocket part 25 disposed between the sealing part 24 and the accommodation part 22. The gas pocket part 25 may be a portion that is not sealed in a state in which the first case 20a and the second case 20b are in contact with each other. In more detail, the gas pocket part 25 may be disposed on a portion of the inside of the terrace part 23 of each of the pair of cases 20a and 20b, and define a pocket space communicating with the accommodation space of the accommodation part 22. A shape of the gas pocket part 25 is not limited.

A portion of a gas generated due to an abnormal operation of the electrode assembly 10 may be introduced into the gas pocket part 25 from the accommodation part 22. Therefore, an increase in internal pressure of the battery case 20 due to the gas may be sufficiently prevented or delayed.

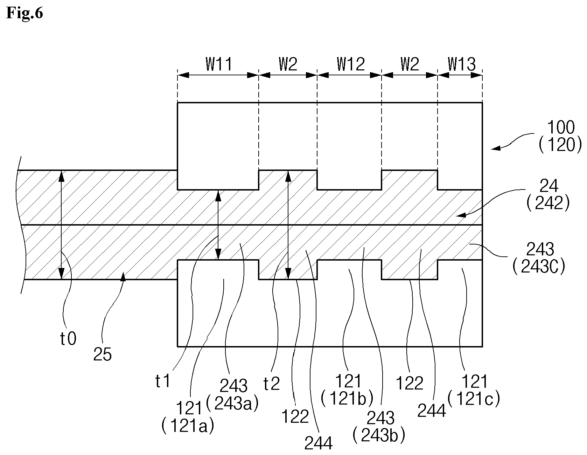

The sealing part 24 according to an embodiment of the present invention may include a pattern for improving sealing strength. In more detail, the sealing part 24 may include a thin-part 243 extending along an edge of the sealing part 24 and a thick-part 244 extending parallel to the thin-part 243 and thicker than the thin-part 243 (see FIG. 6).

The thin-part 243 may be provided by being pressed by a protrusion 121 of the sealing tool 100, which will be described later. The thick-part 244 may be provided by being pressed by a recess 122 of the sealing tool 100, which will be described later. That is, the thin-part 243 may be a portion provided by being pressed relatively strongly than the thick-part 244. Thus, sealing strength of the thin-part 243 may be greater than that of the thick-part 244.

When the internal pressure of the battery case 20 becomes very high, the sealing part 24 may be discontinuously broken due to a difference in sealing strength between the thin-part 243 and the thick-part 244. That is, the breaking path or peeling path of the polymer layer defining the innermost layer of the sealing part 24 may increase. As a result, when compared to a case in which the sealing part 24 is continuously broken, the overall sealing strength of the sealing part 24 may be improved, and the venting of the gas may be delayed.

The thin-part 243 and the thick-part 244 may be provided alternately in a width direction of the sealing part 24. In more detail, the shortest path through which the gas in the battery case 20 breaks the sealing part 23 and is vented may be parallel to the width direction of the sealing part 23. A plurality of thin-parts may be disposed at predetermined intervals in the path. As a result, the sealing strength of the sealing part 24 may increase, and the breakage may be effectively delayed.

The thin-part 243 and the thick-part 244 may be included in the second sealing area 242 of the sealing part 24. The thin-part 243 and the thick-part 244 may not be included in the first sealing area 241 of the sealing part 24. That is, the first sealing area 241 may be provided to be flat.

According to conventional common sense or data, when the internal pressure of the battery case 20 increases due to the gas generated due to the abnormal operation of the electrode assembly 10, the breakage may occur relatively more easily in the second sealing area 242 than in the first sealing area 241. Therefore, a pattern may be provided on the second sealing area 242 to increase in sealing strength and delay the gas venting. In addition, the first sealing area 241 may be provided to be flat without forming a pattern, and thus, gas release through the insulating member 14 or influence on the insulating performance of the insulating member 14 may be minimized.

However, it is not limited thereto, and the first sealing area 241 may include the thin-part 243 and the thick-part 244.

The thin-part 243 and the thick-part 244 will be described in more detail later.

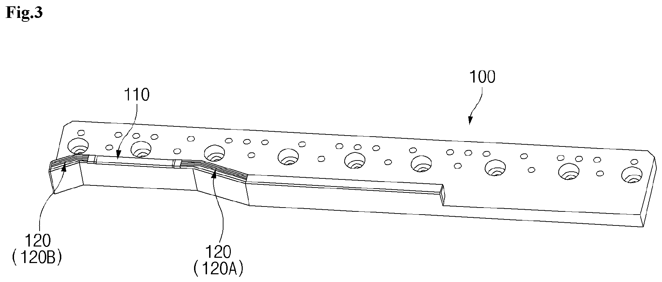

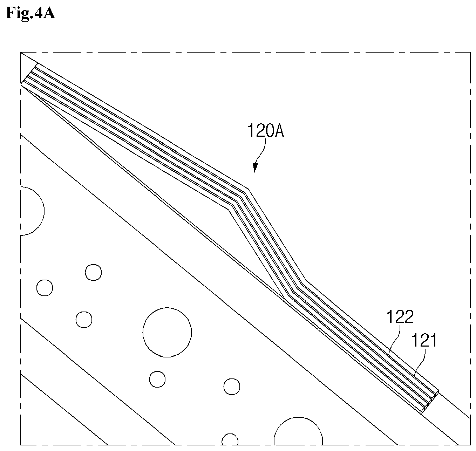

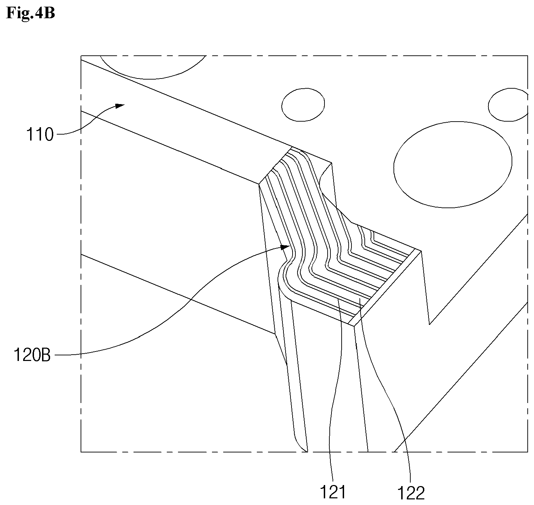

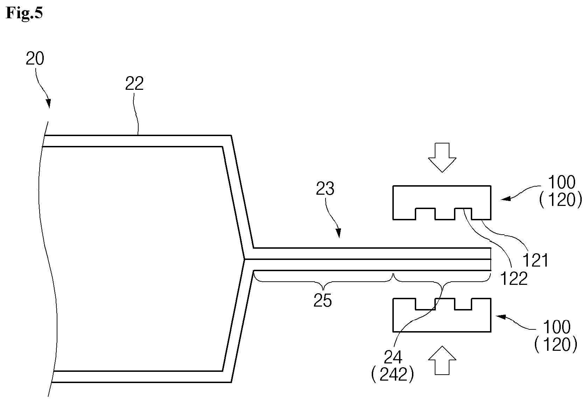

FIG. 3 is a perspective view of the sealing apparatus according to an embodiment of the present invention, FIGs. 4a and 4b is an enlarged view of a second pressing area and surroundings thereof of the sealing apparatus illustrated in FIG. 3, and FIG. 5 is a schematic view for explaining an operation of the sealing apparatus according to an embodiment of the present invention.

The sealing apparatus according to an embodiment of the present invention may seal the battery case 20, more specifically, the terrace part 23 of the secondary battery 1.

The sealing apparatus may include a pair of sealing tools 100 that face each other with the terrace part 23 of the battery case 20 therebetween and are configured to be adjusted in mutual distance. A portion of the terrace part 23 may be compressed and sealed between the pair of sealing tools 100, and the sealing part 24 may be provided. Adjustment of a distance between the pair of sealing tools 100 may be performed by a driving device including a linear actuator or a motor, and since this is a well-known technology, description thereof will be omitted.

Each sealing tool 100 may include a first pressing area 110 that seals the inner surface of the terrace part 23 to the insulating member 14 and a second pressing area 120 that seals the inner surfaces of the terrace part 23 to each other. That is, the first pressing area 110 may define a first sealing area 241 on the terrace part 23, and the second pressing area 120 may define a second sealing area 242 on the terrace part 23.

The second pressing area 120 may be disposed on both sides with the first pressing area 110 therebetween. Both the second pressing areas 120 may extend to be inclined or rounded with respect to the extension direction of the first pressing area 110. Both the second pressing areas 120 may extend in different directions. The extension direction of each second pressing area 120 may not be constant, but vary during the extension. However, it is not limited to this, and the second pressing area 120 and the first pressing area 110 may extend in parallel to each other.

One 120A of the second pressure areas 120 may be provided to be relatively long, and the other one 120B may be provided to be relatively short.

The sealing tool 100 according to an embodiment of the present invention may include a pattern structure to improve the sealing strength of the sealing part 24. In more detail, the sealing tool 100 may include a protrusion 121 protruding toward the terrace part 23 and a recess 122 provided to be stepped from the protrusion 121.

The protrusion 121 and the recess 122 may extend parallel to each other. The protrusion 121 and recess 122 may be disposed alternately in the width direction of the sealing tool 100. As a result, the sealing strength of the sealing part 24 disposed on the terrace part 23 may increase, and the breakage may be effectively delayed.

The protrusion 121 and the recess 122 may be included in the second pressing area 120 of the sealing tool 100. The protrusion 121 and the recess 122 may not be included in the first pressing area 110 of the sealing tool 100. That is, the first pressing area 110 may be provided to be flat.

However, it is not limited to this, and the first pressing area 110 may include the protrusion 121 and the recess 122.

The protrusion 121 and the recess 122 will be described in more detail later.

FIG. 6 is an enlarged cross-sectional view of the sealing tool and the sealing part provided in the pouch-type battery case by the sealing tool, which are illustrated in FIG. 5.

In the sealing part 24 of the battery case 20, a portion pressed by the protrusion 121 may be provided as the thin-part 243, and a portion pressed by the recess 122 may be provided as the thick-part 244.

The protrusion 121 and recess 122 may be disposed alternately with respect to the width direction of the sealing tool 100. The protrusion 121 may be provided in plurality, and the recess 122 may be provided with at least one protrusion 121. That is, each recess 122 may be disposed between the protrusions 121.

Thus, the thin-part 243 and the thick-part 244 may be provided alternately with respect to the width direction of the sealing part 24. The thin-part 243 may be provided in plurality, and at least one thick-part 244 may be provided. That is, each thick-part 244 may be disposed between the thin-parts 243.

The protrusion 121 may be disposed at the innermost side of the sealing tool 100. The inside of the sealing tool 100 may be referred to as a side closer to the accommodation part 22 (see FIG. 5) of the battery case 20 in the width direction of the sealing tool 100. As a result, a phenomenon in which the polymer layer (e.g., polypropylene) defining the innermost layer of the battery case 20 is melted and pushed toward the gas pocket part 25 during the formation of the sealing part 24 may be prevented from occurring.

Thus, the thin-part 243 may be disposed at the innermost side of the sealing part 24. The inside of the sealing part 24 may mean a side closer to the accommodation part 22 (see FIG. 5) in the width direction of the sealing part 24. As a result, the innermost side of the sealing part 24 may be strongly sealed, and the occurrence of the first breakage may be delayed as much as possible.

The plurality of protrusions 121 of the sealing tool 100 may include a first protrusion 121a and a second protrusion 121b disposed outside the first protrusion 121a. The first protrusion 121a may be disposed at the innermost side of the sealing tool 100 and may be called the innermost protrusion.

The plurality of protrusions 121 may further include a third protrusion 121c disposed outside the second protrusion 121b. If necessary, the plurality of protrusions 121 may further include a fourth protrusion, a fifth protrusion, etc.

The plurality of protrusions 121 may have a larger width as the protrusions are disposed inside the sealing tool 100 in the width direction. In more detail, a width W11 of the first protrusion 121a may be larger than a width W12 of the second protrusion 121b. The width W12 of the second protrusion 121b may be larger than a width W13 of the third protrusion 121c. For example, the width W11 of the first protrusion 121a may be 30% of the width of the sealing tool 100, and the width W12 of the second protrusion 121b may be 20% of the width of the sealing tool 100, and the width W13 of the third protrusion 121c may be 10% of the width of the sealing tool 100. Here, the width of the sealing tool 100 may mean a width of a portion overlapping the sealing part 24 (for example, W11+W2+W12+W2+W13).

Each of the plurality of recesses 122 may have a constant width W2. The width W2 of each recess 122 may be less than the width W11 of the first protrusion 121a.

The plurality of thin-parts 243 of the sealing part 24 may include a first thin-part 243a and a second thin-part 243b disposed outside the first thin-part 243a. The first thin-part 243a may be disposed at the innermost side of the sealing part 24 and may be called the innermost thin-part.

The plurality of thin-parts 243 may further include a third thin-part 243c disposed outside the second thin-part 243b. If necessary, the plurality of thin-parts 243 may further include a fourth thin-part, a fifth thin-part, etc.

The plurality of thin-parts 243 may have a larger width as the thin-parts are disposed inside the sealing part 24 in the width direction. In more detail, the width W11 of the first thin-part 243a may be larger than the width W12 of the second thin-part 243b. The width W12 of the second thin-part 243b may be larger than the width W13 of the third thin-part 243c. For example, the width W11 of the first thin-part 243a may be 30% of the width of the sealing part 24, and the width W12 of the second thin-part 243b may be 20% of the width of the sealing part 24, and the width W13 of the third thin-part 243c may be 10% of the width of the sealing part 24. Here, the width of the sealing part 24 may mean a width of a portion pressed by the sealing tool 100 (for example, W11+W2+W12+W2+W13).

Each of the plurality of recesses 122 may have a constant width W2. The width W2 of each recess 122 may be less than the width W11 of the first protrusion 121a.

As a result, the width of the thin-part 243 disposed inside the sealing part 24 having a limited width may increase to effectively delay the breakage of the sealing part 24. This is because the more the plurality of thin-parts 243 are disposed at the inside, the stronger the breakage delay effect due to their widths is exerted.

When the pair of sealing tools 100 press the terrace part 23, a distance t1 between the protrusions 121 of the pair of sealing tools 100 may be adjusted to be 68% to 82% of an initial thickness of t0 of the terrace part 23. The initial thickness t0 of the terrace part 23 may be based on measurement in the state in which the terrace part 23 of the first case 20a and the terrace part 23 of the second case 20b are in close contact with each other. That is, the initial thickness t0 of the terrace part 23 may mean the sum of the thickness of the terrace part 23 of the first case 20a and the thickness of the terrace part 23 of the second case 20b.

Thus, the thickness t1 of the thin-part 243 of the sealing part 24 provided by pressing the terrace part 23 by the pair of sealing tools 100 may be 68% to 82% of the thickness t0 of the gas pocket part 25. Since the gas pocket part 25 is an unsealed portion, the gas pocket part 25 may have the same thickness as the initial thickness t0 of the terrace part 23. The thickness t0 of the gas pocket part 25 may be based on the measurement in a state of being in close contact so that no space is generated within the gas pocket part 25.

As a result, the thin-part 243 of the sealing part 24 may have sufficiently strong sealing strength, and the venting of the gas may be effectively delayed. If the distance t1 between the protrusions 121 of the pair of sealing tools 100 is less than 68% of the initial thickness t0 of the terrace part 23, the sealing part 24 may be excessively pressed and broken. Conversely, if the distance t1 between the protrusions 121 of the pair of sealing tools 100 is smaller than 82% of the initial thickness t0 of the terrace part 23, it may be difficult to achieve sufficient sealing strength.

When the pair of sealing tools 100 press the terrace part 23, a distance t2 between the recesses 122 of the pair of sealing tools 100 may be adjusted to be 86% to 99% of an initial thickness of t0 of the terrace part 23.

Thus, the thickness t2 of the thick-part 244 of the sealing part 24 provided by pressing the terrace part 23 by the pair of sealing tools 100 may be 86% to 99% of the thickness t0 of the gas pocket part 25.

As a result, the thick-part 243 of the sealing part 24 may also have predetermined sealing strength, and the venting of the gas may be further delayed. If a distance t2 between the recesses 122 of the pair of sealing tools 100 is less than 86% of the initial thickness t0 of the terrace part 23, since a height difference between the protrusion 121 and the recess 122 is too small, the sealing strength of the thin-part 243 and the thick-part 244 may be similar to each other. That is, it may be difficult to obtain the vent delay effect that is capable of being achieved due to the difference in sealing strength between the thin-part 243 and the thick-part 244. Conversely, if the distance t2 between the recesses 122 of the pair of sealing tools 100 is greater than 99% of the initial thickness t0 of the terrace part 23, the sealing of the thick-part 244 may not be performed properly.

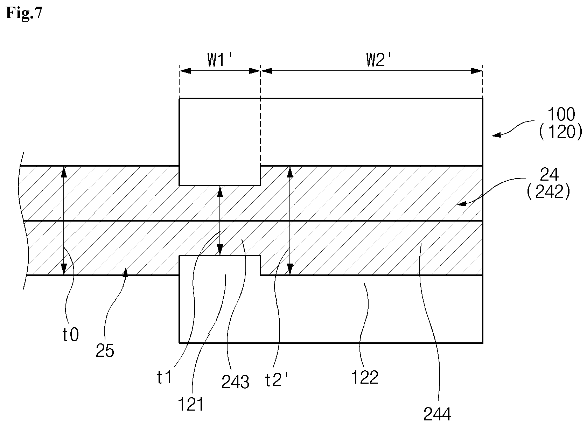

FIG. 7 is an enlarged cross-sectional view of a sealing tool and the sealing part provided in the pouch-type battery case by the sealing tool according to another embodiment of the present invention.

Hereinafter, contents duplicated with the foregoing embodiment will be omitted, and differences will be mainly described.

The sealing tool 100 according to another embodiment of the present invention may include a dam structure to improve sealing strength of a sealing part 24. In more detail, a single protrusion 121 may be disposed inside a recess 122. The single protrusion 121 may be disposed at the innermost side of the sealing tool 100.

The protrusion 121 may have a sufficient width. For example, a width W1' of the protrusion 121 may be 40% of a width of the sealing tool 100. A width W2' of the recess 122 may be larger than the width W1' of the protrusion 121.

Thus, the sealing part 24 may include a dam structure to improve sealing strength. In more detail, a single thin-part 243 may be disposed inside the thick-part 244. The single thin-part 243 may be disposed at the innermost side of the sealing part 24.

The thin-part 243 may have a sufficient width. For example, the width W1' of the thin-part 243 may be 40% of the width of the sealing part 24. The width W2' of the thick-part 244 may be larger than the width W1' of the thin-part 243.

When the pair of sealing tools 100 press the terrace part 23, a distance t1 between the protrusions 121 of the pair of sealing tools 100 may be adjusted to be 68% to 82% of an initial thickness of t0 of the terrace part 23. Thus, the thickness t1 of the thin-part 243 of the sealing part 24 may be 68% to 82% of a thickness t0 of the gas pocket part 25. This is the same numerical range as the previously described embodiment.

When the pair of sealing tools 100 press the terrace part 23, a distance t2' between the recesses 122 of the pair of sealing tools 100 may be adjusted to be 78% to 92% of an initial thickness of t0 of the terrace part 23. Thus, a thickness t2 of the thick-part 244 of the sealing part 24 may be 78% to 92% of a thickness t0 of the gas pocket part 25.

This is a different numerical range from the numerical range of 86% to 99% in the previously described embodiment. According to this embodiment, since the sealing tool 100 has only one protrusion 121, to compensate for this, the recess 122 may press the sealing part 24 more strongly.

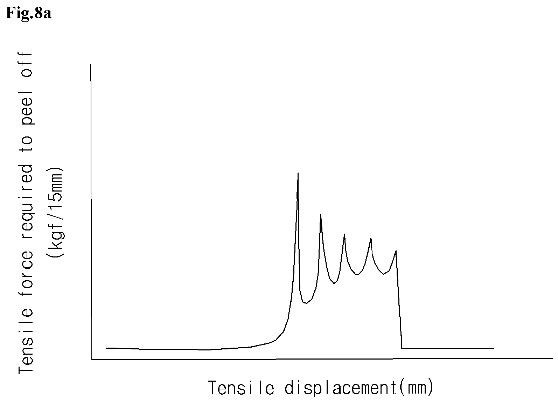

FIGS. 8a to 8c are graphs obtained by summarizing results of experiments to confirm an effect of the sealing apparatus according to an embodiment of the present invention.

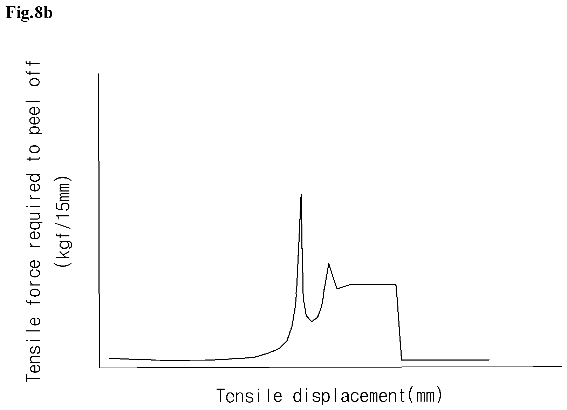

FIG. 8a is an experimental graph illustrating tensile force required to peel off the sealing part sealed by the sealing tool for displacement in the width direction according to an embodiment of the present invention. FIG. 8b is an experimental graph illustrating tensile force required to peel off the sealing part sealed by a general sealing tool (comparative example) having a smooth sealing area for displacement in the width direction.

When compared to FIG. 8b, it is seen that a peak that prevents breakage occurs repeatedly when the sealing part is peeled off in FIG. 8a. That is, when compared to a case in which the sealing part is continuously peeled, it is confirmed that the sealing tool 100 according to the present invention increases a peeling path of the sealing part, and high tensile force is required several times to completely peel off the sealing part. That is, it is confirmed that the total amount of tensile force required for complete the peeling or breakage of the sealing part provided by the sealing tool 100 according to the present invention is greater than that of the sealing part provided by the general sealing tool.

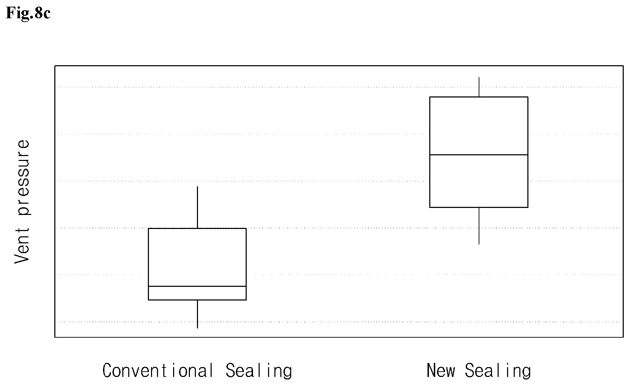

FIG. 8c is an experimental graph illustrating a pressure range in which each of the sealing part for FIG. 8a and the sealing part for FIG. 8b is completely broken.

Referring to FIG 8c, it is confirmed that the sealing part provided by the sealing tool according to the present invention withstands a higher pressure when compared to that of the sealing part formed by the general sealing tool. As a result, it is confirmed that the venting caused by the breakage of the sealing part is sufficiently delayed.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being comprised in the present invention.

### [Description of the Symbols]

| | | | |
|---|---|---|---|
| 1: | Pouch-type secondary battery assembly | 10: | Electrode |
| 11: | Electrode tab | 12: | Electrode lead |
| 14: | Insulating member | 20: | Pouch-type battery case |
| 21: | Folding part | 22: | Accommodation part |
| 23: | Terrace part | 24: | Sealing part |
| 241: | First sealing area | 242: | Second sealing area |
| 243: | thin-part | 244: | thick-part |
| 25: | Gas pocket part | 100: | Sealing tool |
| 110: | First pressing area | 120: | Second pressing area |
| 121: | Protrusion | 122: | Recess |

## Claims

1. A sealing apparatus for sealing a pouch-type battery case comprising an accommodation part configured to accommodate an electrode assembly and a terrace part disposed around the accommodation part, the sealing apparatus comprising:
a pair of sealing tools configured to face each other with the terrace part therebetween and to be adjusted in mutual distance,
wherein each of the sealing tools comprises:
a protrusion protruding toward the terrace part;
and
a recess defined to be stepped with respect to the protrusion,
wherein, when the pair of sealing tools press the terrace part, a distance between the protrusions of the pair of sealing tools is adjusted to be 68% to 82% of an initial thickness of the terrace part.

2. The sealing apparatus of claim 1, wherein the protrusion is disposed at the innermost side of the sealing tool.

3. The sealing apparatus of claim 1, wherein the protrusion and the recess are disposed alternately in a width direction of the sealing tool.

4. The sealing apparatus of claim 3, wherein, when the pair of sealing tools press the terrace part, a distance between the recesses of the pair of sealing tools is adjusted to be 86% to 99% of the initial thickness of the terrace part.

5. The sealing apparatus of claim 3, wherein a plurality of the protrusions comprise:
a first protrusion; and
a second protrusion disposed outside the first protrusion and having a width less than a width of the first protrusion.

6. The sealing apparatus of claim 3, wherein a width of the recess is less than a width of an innermost protrusion.

7. The sealing apparatus of claim 3, wherein the protrusion is plural and has a greater width as the protrusion is disposed inside with respect to the width direction of the sealing tool.

8. The sealing apparatus of claim 1, wherein the protrusion is single and disposed inside the recess.

9. The sealing apparatus of claim **8,** wherein, when the pair of sealing tools press the terrace part, a distance between the recesses of the pair of sealing tools is adjusted to be 78% to 92% of the initial thickness of the terrace part.

10. The sealing apparatus of claim 1, wherein each of sealing tools comprises:
a first pressing area on which an inner surface of the terrace part and an insulating member, which surrounds an electrode lead connected to the electrode assembly, are sealed to each other; and
a second pressing area on which inner surfaces of the terrace parts are sealed to each other,
wherein the protrusion and the recess are comprised in the second pressing area.

11. A pouch-type secondary battery comprising:
an electrode assembly; and
a pouch-type battery case comprising an accommodation part configured to accommodate the electrode assembly and a terrace part disposed around the accommodation part,
wherein the terrace part comprises:
a sealing part; and
a gas pocket part disposed between the sealing part and the accommodation part,
wherein the sealing part comprises:
a thin-part extending along an edge of the sealing part; and
a thick-part extending in parallel to the thin-part and thicker than the thin-part,
wherein a thickness of the thin-part is 68% to 82% of the thickness of the gas pocket part.

12. The pouch-type secondary battery of claim 11, wherein the thin-part is disposed at an innermost side of the sealing part.

13. The pouch-type secondary battery of claim 11, wherein the thin-part and the thick-part are disposed alternately in a width direction of the sealing part.

14. The pouch-type secondary battery of claim 13, wherein the thickness of the thick-part is 86% to 99% of the thickness of the gas pocket part.

15. The pouch-type secondary battery of claim 13, wherein a plurality of the thin-parts comprise:
a first thin-part; and
a second thin-part disposed outside the first thin-part and having a width less than a width of the first thin-part.

16. The pouch-type secondary battery of claim 13, wherein a width of the thick-part is less than a width of an innermost thin-part.

17. The pouch-type secondary battery of claim 13, wherein the thin-part is plural and has a greater width as the thin-part is disposed inside with respect to the width direction of the sealing part.

18. The pouch-type secondary battery of claim 11, wherein the thin-part is single and disposed inside the thick-part in a width direction of the sealing part.

19. The pouch-type secondary battery of claim 18, wherein the thickness of the thick-part is 78% to 92% of the thickness of the gas pocket part.

20. The pouch-type secondary battery of claim 11, further comprising:
an electrode lead connected to the electrode assembly to protrude to the outside of the terrace part; and
an insulating member configured to insulate the electrode lead and the battery case from each other,
wherein the sealing part comprises:
a first sealing area on which an inner surface of the terrace part and the insulating member are sealed to each other; and
a second sealing area on which inner surfaces of the terrace parts are sealed to each other,
wherein the thin-part and the thick-part are comprised in the second sealing area.
